# EUROPÄISCHE PATENTSCHRIFT

(11) **EP 0 779 968 B1**
(45) Veröffentlichungstag und Bekanntmachung des Hinweises auf die Patenterteilung: **08.08.2001**
(21) Anmeldenummer: 95929743.3
(22) Anmeldetag: 05.09.1995
(51) Int. Cl.: G01B 7/34, G01N 27/00, G11B 9/00

(54) **VERFAHREN ZUM SCANNEN EINER PROBENOBERFLÄCHE, INSBESONDERE MIT RASTERSONDENMIKROSKOPEN**
PROCESS FOR SCANNING A SAMPLE SURFACE, IN PARTICULAR BY MEANS OF SCANNING FORCE MICROSCOPES
PROCEDE DE BALAYAGE DE LA SURFACE D'ECHANTILLONS, NOTAMMENT AU MOYEN DE MICROSCOPES A FORCES ATOMIQUES

(30) Priorität: 10.09.1994 DE 4432304
(43) Veröffentlichungstag der Anmeldung: 25.06.1997
(73) Patentinhaber: FORSCHUNGSZENTRUM JÜLICH GMBH, 52425 Jülich (DE)
(72) Erfinder: HÜRTTLEN, Werner, D-52428 Jülich (DE)
(86) Internationale Anmeldenummer: DE9501191
(87) Internationale Veröffentlichungsnummer: WO9607868

(56) Entgegenhaltungen:
- EP-A- 0 247 219
- EP-A- 0 342 770
- EP-A- 0 397 116
- EP-A- 0 579 380
- EP-A- 0 674 170
- REVIEW OF SCIENTIFIC INSTRUMENTS, Bd. 59, Nr. 6, Juni 1988 NEW YORK US, Seiten 840-842, D.W.POHL ; R.MÖLLER '"Tracking" tunneling microscopy'
- PATENT ABSTRACTS OF JAPAN vol. 014 no. 012 (E-871) ,11.Januar 1989 & JP,A,01 258350 (HITACHI LTD) 16.Oktober 1989,

## Beschreibung

Die Erfindung bezieht sich auf ein Verfahren zum Scannen einer Probenoberfläche insbesondere mittels einer Rastersonde eines Rastersondenmikroskops, bei dem sich Rasternadel und Probe relativ zu einander bewegen. Die Rasternadel wird in einem vorgegebenen Raster über die zu scannende Probenoberfläche geführt.

Rastersondenmikroskope dienen zur Analyse der Struktur von Probenoberflächen bis hin zu deren atomaren Auflösung. Zur Abtastung und topographischen Abbildung der Probenoberfläche wird eine Rastersonde eingesetzt, an deren Spitze v.d. Waalsche Kräfte, magnetische oder elektrostatische Kräfte angreifen, die die Rastersonde bewegen und deren Bewegung registriert wird (Rasterkraftmikroskopie), oder es wird zwischen Rastersonde und Probe eine elektrische Spannung zur Erzeugung eines Tunnelstroms zwischen Spitze und Probenoberfläche angelegt und die Bewegung der Rastersonde bei konstantem Tunnelstrom oder konstantem Abstand zwischen Rastersondenspitze und Probenoberfläche gemessen (Rastertunnelmikroskopie). Dabei wird in allen Fällen entweder die Rastersonde in sehr geringer Entfernung über die Probenoberfläche bewegt oder die Probe dicht an der Rastersonde vorbeigeführt.

Das Abtasten der Probenoberfläche erfolgt nach einem vorgegebenen Rasterschema. Dabei wird jeder Meßpunkt elektronisch angesteuert, das Meßergebnis ausgewertet und unter Benutzung entsprechender Rechnerprogramme auf den Bildschirm eines Monitors übertragen und sichtbar gemacht.

Aus "Review of Scientific Instruments, Bd. 59, Nr. 6, Juni 1988, Seiten 840-42, Pohl, Möller: Tracking tunneling microscopy" sowie aus EP-A 0 247 219 und Patent Abstracts of Japan JP-A 1258350 sind Verfahren zum rasterförmigen Scannen einer Probenoberfläche mittels einer Meßsonde eines Rastertunnelmikroskops bekannt, bei dem sich die Sonde und die Probe während des Scannens relativ zueinander kurvenförmig bewegen.

Ausgehend von der Darstellung der Meßwerte auf dem Bildschirm ist es aus EP 0 288 980 A2 bekannt, die Rasterbewegung der Rastersonde zeilenweise auszuführen und dabei Meßwerte aufzunehmen. Die Rastersonden springen am Ende jeder Zeile zur nächsten Zeile und wechseln dann ihre Bewegungsrichtung um 180°.

Bei einer solchen zeilenweisen Führung von Rastersonde und Probe mit Umkehr der Bewegungsrichtung jeweils am Zeilenende wirken sich dynamische Belastungen (z. B. in Form von Schwingungen) sowie Hystereseeffekte bei dem die Bewegung steuernden Piezoelementen negativ auf die Präzision der Messungen aus. Es werden Meß- und Bildstörungen verursacht, die eine wünschenswerte Steigerung der Meßgeschwindigkeit und Bildfolge begrenzen.

Aufgabe der Erfindung ist die Schaffung eines Verfahrens zur Herabsetzung derartiger Meßstörungen.

Diese Aufgabe wird bei einem Verfahren der eingangs genannten Art durch die in Patentanspruch 1 angegebenen Maßnahmen gelöst. Vorteilhafte Ausgestaltungen ergeben sich aus den auf den Hauptanspruch bezogenen Ansprüchen.

Eine kurvenförmig verlaufende Bewegung anstelle der bekannten Bewegungsumkehr durchzuführen, hat zur Folge, daß Beschleunigungseffekte und damit Meßstörungen vermindert werden. Je größer der Kurvenradius gewählt wird, desto stärker werden Meßstörungen herabgesetzt. Der Kurvendurchmesser beträgt daher vorteilhaft ein mehrfaches des Abstandes zweier benachbarter Rasterpunkte.

Zweckmäßig wird stetig gescannt. Stetiges Scannen bedeutet, daß fortlaufend Meßwerte aufgenommen werden bzw. daß die Sonde nicht über mehrere Rasterpunkte hinwegbewegt wird, ohne dabei Meßwerte aufzunehmen. Stetiges Scannen erhöht die Meßgeschwindigkeit, da andernfalls die infolge einer Unterbrechung des Scannens (bei gleichzeitiger Fortführung der verfahrensgemäßen Relativbewegung) nicht aufgenommenen Meßwerte durch erneutes anschließendes Ansteuern der entsprechenden Rasterpunkte nachträglich aufgenommen werden müßten.

Eine kurvenförmig verlaufende Bewegung kann im Unterschied zur Bewegungsumkehr gemäß Stand der Technik vorteilhaft unter Beibehaltung einer zumindest nahezu konstanten Bewegungsgeschwindigkeit erfolgen. Einhaltung einer weitgehend konstanten Geschwindigkeit hat zur Folge, daß nur geringe Bahnbeschleunigungen auftreten und somit durch Bahnbeschleunigungen verursachte Meßstörungen gering gehalten werden.

Die Bewegung verläuft ferner vorteilhaft stetig, d. h. sie verläuft gleichförmig und ist damit frei von ruckartigen, abrupten Bewegungen.

Ist eine Bewegungsumkehr gemäß Stand der Technik unvermeidlich, so wird vorteilhaft die Bahngeschwindigkeit bis zum Stillstand allmählich abgebremst (durch kleine Bahnbeschleunigungen), um dann in umgekehrter Richtung mit geringen Bahnbeschleunigungen die gewünschte Geschwindigkeit wieder zu erreichen.

Die verwendeten Begriffe sind wie folgt zu verstehen:

Unter Raster ist ein Punktsystem auf einer Fläche zu verstehen. Die Punkte des Rasters sind gitterartig über die Fläche verteilt, d. h. sie befinden sich an den Schnittpunkten der Gitterlinien. Rasterförmiges Scannen bedeutet folglich, daß Meßwerte an den Punkten eines vorgewählten Rasters aufgenommen werden.

Unter Relativbewegung zwischen Sonde und Probenoberfläche ist zu verstehen, daß die Sonde über die Probenoberfläche geführt oder die Probe entsprechend zur Probenoberfläche bewegt wird. Möglich sind ferner gleichzeitige Bewegungen von Sonde und Probe, die asynchron zueinander verlaufen. Während der Relativbewegung wird gescannt, d. h. die gewünschten Meßwerte werden während der Relativbewegung aufgenommen.

Unter Bahngeschwindigkeit ist zurückgelegte Entfernung pro Zeit zu verstehen, also die Geschwindigkeit dem Betrage nach.

Unter Materialanalyse ist zu verstehen, daß beliebige physikalische oder chemische Eigenschaften des Materials ermittelt werden.

Die Relativbewegung zwischen Rastersonde und Probe wird vorzugsweise stetig und mit nahezu konstanter Bewegungsgeschwindigkeit durchgeführt. Bei steter Bewegung mit nahezu konstanter Geschwindigkeit entfallen durch Bewegungsumkehr mit Bewegungstotpunkten auftretende übermäßige Beschleunigungen von Rastersonde oder Probe und davon verursachte Störungen. Die Qualität sowohl bei der Messung als auch bei der Wiedergabe der Meßwerte wird gesteigert.

Eine gleichmäßige Geschwindigkeit beim Scannen läßt sich bei spiralförmiger Relativbewegung zwischen Rastersonde und Probe erreichen. Die Bewegung verläuft stetig bei konstanter Geschwindigkeit, wobei die Rotationsgeschwindigkeit (Winkelgeschwindigkeit) vom äußeren zum inneren Bereich der Spirale zunimmt. Während des gesamten Rasterablaufs werden pro Zeiteinheit die gleiche Anzahl von Meßpunkten gemessen und ausgewertet. Es lassen sich vorteilhaft höhere Bewegungsgeschwindigkeiten einstellen, weil bei steter, gleichmäßiger Bewegung keine Beschleunigungsbeträge zu berücksichtigen sind, wie sie bei wechselnder Bewegungsgeschwindigkeit und Umkehr der Bewegungsrichtung auftreten.

Soll auf dem Monitor ein seinem Bildschirm angepaßter rechteckiger Oberflächenausschnitt wiedergegeben werden, so werden von dem von der Rastersonde insgesamt abgetasteten spiralförmigen Oberflächenbereich nur ein entsprechender Anteil von Meßpunkten ausgewertet und auf den Monitor übertragen.

Vorteilhaft sind kreisförmige Scannbewegungen, wobei nach jedem Umlauf eines Kreises der Kreisradius verändert wird, um die vorgegebene Fläche abzutasten. Alternativ oder ergänzend hierzu läßt sich die Probenoberfläche auch beispielsweise bei konstant bleibendem Kreisradius durch Veränderung der örtlichen Lage des Kreismittelpunkts scannen. Dabei können die Ortsparameter für die Lage des Kreismittelpunkts stetig, aber auch schrittweise geändert werden.

Dem rechteckigen Bildschirm stärker angepaßt sind ellipsenförmige Scannbewegungen, wobei wie bei kreisförmiger Scannbewegung nach jedem Ellipsenumlauf die Ellipsenradien je nach abzutastender Fläche schrittweise verkürzt oder verlängert werden oder die örtliche Lage der Ellipsenbrennpunkte verändert wird. Die Bewegung von einer Ellipse zur anderen erfolgt vorteilhaft stetig mit allmählichem Übergang bei konstant bleibender Bewegungsgeschwindigkeit. Abrupte unstete Bewegungsänderungen, die zu Schwingungen führen, sind vermieden.

Eine noch engere Anpassung an ein rechteckiges Monitorbild wird bei einer Bewegungsführung erreicht, bei der Rastersonde oder Probe einen dem Monitorbild entsprechenden Oberflächenbereich der Probenoberfläche geradlinig abtasten und außerhalb dieses Oberflächenbereiches in halbkreisförmigen Bogen zum zu scannenden Bereich zurückgeführt werden. Die Halbkreisradien sind dabei so zu wählen, daß von der Rastersonde bei jedem geradlinigen Abtasten des Oberflächenbereichs eine neue Zeile erreicht wird.

Bevorzugt wird nach vollständigem Abrastern eines Oberflächenbereichs der nächste Oberflächenbereich unmittelbar anschließend abgetastet. In vorteilhafter Weise wird bei diesem Verfahren eine Rückführung der Rastersonde vom Endpunkt eines Oberflächenbereiches zum Anfangspunkt des nächsten Oberflächenbereiches vermieden. Endpunkt des einen Bereichs und Anfangspunkt des nachfolgenden liegen vielmehr benachbart. Um den Betrag der Rückführzeit läßt sich somit die Bildfolge bei weiterhin konstant bleibender Bewegungsgeschwindigkeit zwischen Rastersonde und Probe steigern.

Nachfolgend wird die Erfindung anhand von Ausführungsbeispielen näher erläutert. Die Zeichnung zeigt im einzelnen:
- Figur 1: spiralförmiges Scannen;
- Figur 2: kreisförmiges Scannen:
- Figur 3: geradliniges Scannen in einem rechteckigen Oberflächenbereich der Probenoberfläche mit kreisbogenförmiger Richtungsumkehr;
- Figur 3a: Scannen mehrerer Oberflächenbereiche;
- Figur 4: geradliniges Scannen wie in Figur 3 mit Richtungsumkehr mit Kreisbogen konstanter Radien;
- Figur 5: kreisförmiges Scannen mit Veränderung der örtlichen Lage der Kreismittelpunkte.

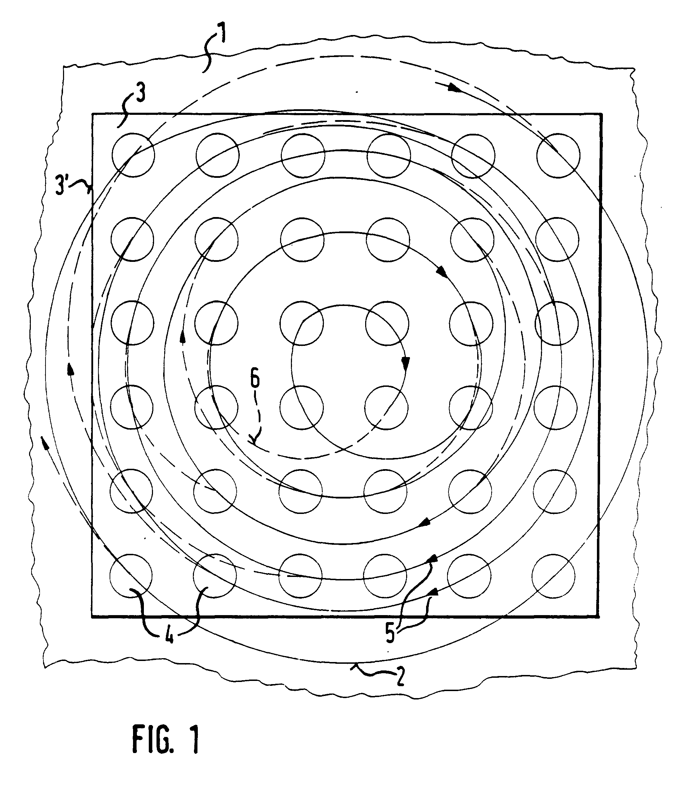

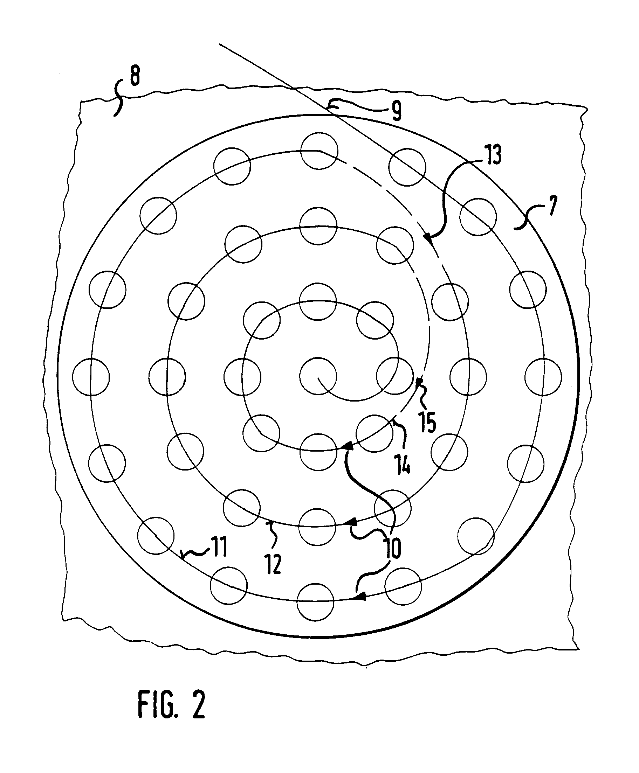

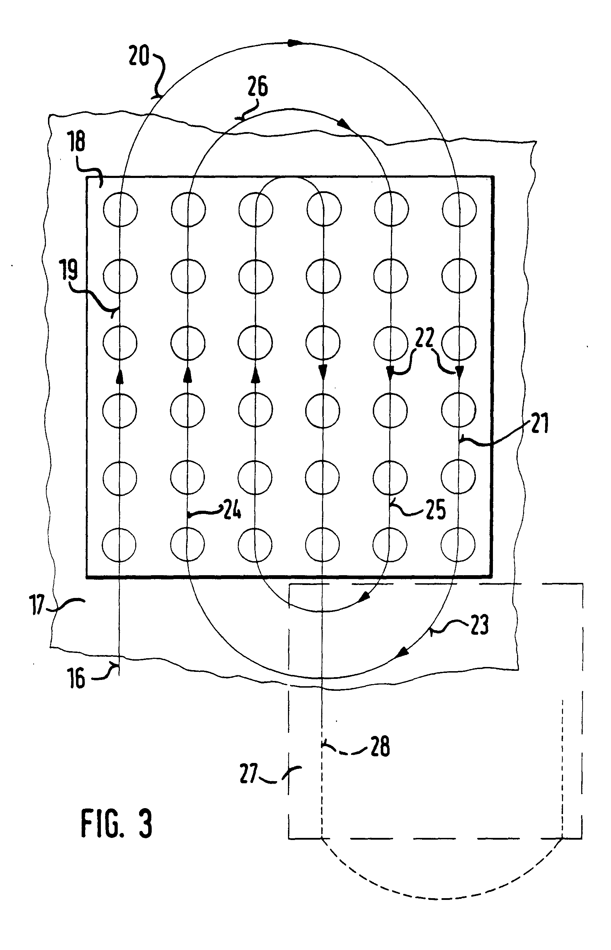

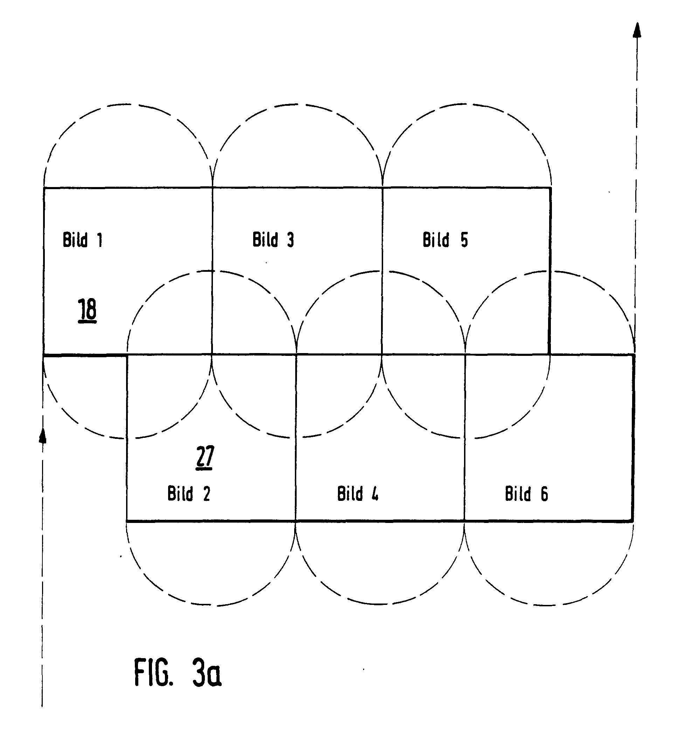

In Figur 1 ist für ein Scannen einer Probenoberfläche 1 ein Bewegungsablauf vorgegeben, der einen spiralförmigen Rasterweg 2 für das Abtasten eines Oberflächenbereichs 3 mit einer Rastersonde bestimmt. Die Rastersonde ist in der Zeichnung nicht dargestellt. Der Rasterweg 2 ist so gewählt, daß Meßpunkte 4, die in Figur 1 und allen übrigen Figuren der Zeichnung nur schematisch eingetragen sind und den zu scannenden Oberflächenbereich vollständig abdecken, innerhalb des Oberflächenbereichs mit im Ausführungsbeispiel rechteckiger Oberflächenbegrenzung 3' von der Rastersonde erfaßt werden. Dabei kann die Rastersonde selbst über die Probenoberfläche geführt werden oder, wie es vor allem bei Rasterkraftmikroskopen üblich ist, die Probe wird relativ zur ortsfesten Rastersonde so bewegt, daß die Rastersonde die Probenoberfläche 1 entsprechend dem Rasterweg 2 abtastet. Der rechteckige Oberflächenbereich 3 ist so bemessen, daß er bei entsprechend gewählter Vergrößerung auf einer Bildschirmfläche eines in der Zeichnung nicht wiedergegebenen Monitors abgebildet werden kann. Die von der Rastersonde gemessenen Werte werden elektrisch erfaßt und mittels entsprechender Rechenprogramme in Bildpunkte umgesetzt.

Die spiralförmige Relativbewegung zwischen Probe und Rastersonde erfolgt stetig ohne abrupte Richtungsänderung und mit gleichförmiger Geschwindigkeit. Die Bewegungsrichtung ist in Figur 1 durch Richtungspfeile 5 markiert. Unstetigkeitsstellen der Bewegung, wie z.B. sprunghafte Richtungsänderungen, sind vermieden. Das Abtasten der Probenoberfläche mit der Rastersonde erfolgt somit weitgehend erschütterungsfrei.

Im Ausführungsbeispiel beginnt das Scannen vom Außenbereich der Probenoberfläche her nach innen und wird auf einem Rasterrückweg 6 von innen wieder nach außen durchgeführt. Der Rasterrückweg 6 ist in Figur 1 strichliniert dargestellt.

Der Rasterrückweg 6 schließt mit gleicher Tangente an den nach innen geführten Rasterweg 2 unter Beibehaltung der Bewegungsrichtung an. Auch die Bewegungsgeschwindigkeit bleibt konstant, so daß sich beim Übergang der Bewegung von innen nach außen keine Störungen durch unstete Bewegungsänderungen ergeben.

In Figur 2 ist ein Scannen mit kreisförmiger Relativbewegung dargestellt. Es wird eine Kreisfläche 7 einer Probenoberfläche 8 abgetastet, wobei ein Rasterweg 9 vom äußeren zum inneren Bereich der Kreisfläche 7 durchfahren wird. Die Bewegungsrichtung ist in Figur 2 mit Richtungspfeilen 10 angegeben.

Nach vollständigem Abtasten eines ersten Rasterkreises 11 wird die Rastersonde in einen zweiten Rasterkreis 12 überführt, Richtungspfeil 13, der in Figur 2 strichpunktiert eingezeichnet ist. Nach Durchlaufen des zweiten Rasterkreises 12 folgt der dritte Rasterkreis 14, den die Rastersonde in einer durch Richtungspfeil 15 markierten Bewegung erreicht. Die aufeinanderfolgenden Rasterkreise 11, 12, 14 weisen Radien auf, die sich vom äußeren ersten Rasterkreis 11 zum jeweils nächsten, weiter innen gelegenen Rasterkreis 12, 14 verkürzen. Die Verkürzung der Radien ist so gewählt, daß sich beim Scannen der Kreisfläche 7 ein vollständiges Bild der abgetasteten Kreisfläche auf dem Bildschirm des Monitors ergibt.

Die Bewegungsgeschwindigkeit bleibt in allen Rasterkreisen und bei Übergang vom einem Rasterkreis zum nächsten stets stetig. Die Präzision der Meßwerte ist somit hoch, und die Bildstörungen in Folge von ungleichmäßigen Rasterbewegungen entfallen weitgehend.

Figur 3 zeigt einen Rasterweg 16, bei dem die Relativbewegung zwischen Rastersonde und Probenoberfläche 17 im rechteckigen Oberflächenbereich 18, der für die Bildschirmabbildung auf dem Monitor bestimmt ist, geradlinig verläuft. Die von der Rastersonde ermittelten Meßwerte werden daher nach elektronischer Auswertung zeilenweise auf dem Bildschirm sichtbar. Außerhalb des rechteckigen Oberflächenbereichs 18 wird die Relativbewegung zwischen Rastersonde und Probe auf Halbkreisbogen geführt. So schließt sich an eine erste geradlinige Rasterstrecke 19 im Oberflächenbereich 18 außerhalb des Oberflächenbereichs ein erster Halbkreisbogen 20 an, über den die Relativbewegung in eine zweite geradlinige Rasterstrecke 21 überführt wird. Die zweite geradlinige Rasterstrecke 21 verläuft zur ersten geradlinigen Rasterstrecke 19 parallel, die Bewegungsrichtungen auf beiden Rasterstrecken sind jedoch gegenläufig. Die Bewegungsrichtung ist in Figur 3 durch Richtungspfeile 22 angegeben.

Am Ende und außerhalb des Oberflächenbereichs 18 schließt an die zweite geradlinige Rasterstrecke 21 ein zweiter Halbkreisbogen 23 an, mit dem die Relativbewegung in eine dritte geradlinige Rasterstrecke 24 einmündet. Der Radius des zweiten Halbkreisbogens 23 ist geringer bemessen als der Radius des ersten Halbkreisbogens 20 und derart, daß über die dritte geradlinige Rasterstrecke 24 derjenige Oberflächenbereich abgetastet wird, der dem entlang der Rasterstrecke 19 zuerst abgetasteten Oberflächenbereich lückenlos benachbart zugeordnet ist. Zum Erreichen einer vierten geradlinigen Rasterwegstrecke 25 ist der Radius eines sich an die dritte geradlinige Rasterwegstrecke 24 anschließenden dritten Halbkreisbogens 26 erneut kleiner bemessen als der Radius des zweiten Halbkreisbogens 23, so daß bei Fortsetzung dieser Art der Rasterbewegung mit geradlinigen Rasterstrecken und Halbkreisbogen zur Richtungsumkehr schließlich der gesamte Oberflächenbereich 18 abgetastet ist.

Die Bewegungsgeschwindigkeit ist auch in den Halbkreisbogen wieder stetig. Die Bewegungsrichtung ändert sich in den Halbkreisbogen mit konstanter Beschleunigung, Unstetigkeiten sind vermieden.

Nach Wiedergabe des Oberflächenbereiches 18 auf dem Bildschirm des Monitors scannt die Rastersonde einen zweiten Oberflächenbereich 27 ab. Im Ausführungsbeispiel schließt sich ein Rasterweg 28 für diesen Oberflächenbereich unmittelbar an eine letzte geradlinige Rasterwegstrecke des Rasterwegs 16 auf dem Oberflächenbereich 18 an. Der zweite Oberflächenbereich 27 und der Rasterweg 28 sind in Figur 3 strichliniert dargestellt. Die Bildfolge beim Abrastern einer Probenoberfläche nach dem in Figur 3 angegebenen Scanverfahren ist in Figur 3a wiedergegeben. Nach Abtasten der Oberflächenbereiche 18, entsprechend Bild 1, und 27, entsprechend Bild 2, folgen Bilder 3 bis 6 der Probenoberfläche 17, im Ausführungsbeispiel grenzen die Bilder aneinander an. Dabei ergeben sich sehr kurze Wegstrecken zwischen den einzelnen zu scannenden Oberflächenbereichen, die Bildfolge ist kürzer bemessen, als es bei bisher bekannten Scannverfahren der Fall ist, bei denen vor Abtastung eines nachfolgenden Oberflächenbereichs zuvor in eine Ausgangsstellung zurückgefahren werden muß.

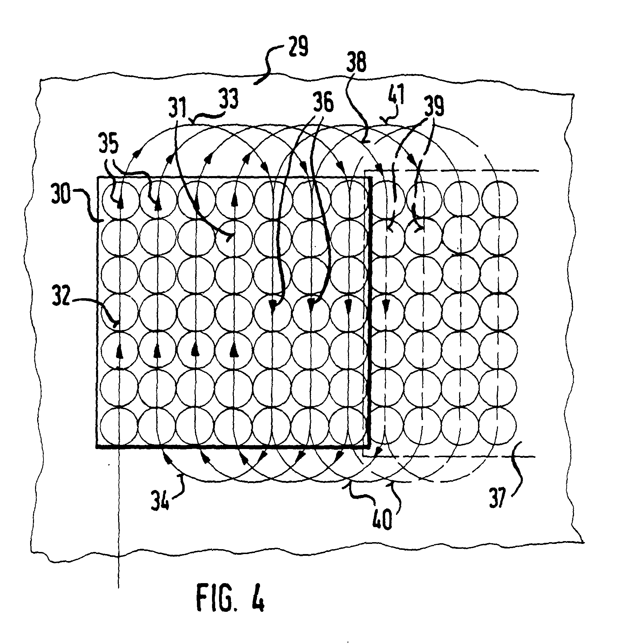

Im Ausführungsbeispiel nach Figur 4 wird auf einer Probenoberfläche 29 in einem Oberflächenbereich 30, der auf dem Bildschirm des Monitors wiedergegeben werden soll, eine Relativbewegung zwischen Rastersonde und Probe erzeugt, bei der in gleicher Weise wie beim Ausführungsbeispiel nach Figur 3 für einen Rasterweg 31 im Oberflächenbereich 30 geradlinige Rasterwegstrecken 32 und außerhalb des Oberflächenbereichs zur Rückführung und Bewegungsumkehr Halbkreisbogen 33, 34 vorgesehen sind. Dabei weisen die Halbkreisbogen 33, die sich auf dem Hinweg mit Bewegungsrichtung in Pfeilrichtung 35 an die geradlinigen Rasterwegstrecken 32 anschließen, einen größeren Radius als die Halbkreisbogen 34 auf, die sich auf dem Rückweg mit Bewegungsrichtung in Pfeilrichtung 36 an die geradlinigen Rasterwegstrecken 32 anschließen. Die Radien sind jeweils so bemessen, daß benachbarte Rasterwegstrecken lückenlos aneinander anschließen und beim Scannen schließlich ein vollständiges Bild des Oberflächenbereiches 30 entsteht. Alle Halbkreisbogen 33 ihrerseits und alle Halbkreisbogen 34 andererseits weisen stets die gleichen Radien auf. Es ergibt sich somit ein sehr gleichmäßiger Bewegungsrhythmus und eine einfache Steuerung für den Scannablauf.

Die gesamte Bewegung erfolgt wieder mit steter Bewegungsgeschwindigkeit und somit in Bezug auf Beschleunigungswerte störungsfrei.

Bei dem Bewegungsablauf nach Figur 4 läßt sich das Scannen eines weiteren Oberflächenbereichs 37 ohne Geschwindigkeitsänderung in gleicher Weise wie nach Figur 3a unmittelbar anschließen. Dem Rasterweg 31 folgt für den Oberflächenbereich 37 ein Rasterweg 38, der in Figur 4 zusammen mit dem Oberflächenbereich 37 strichliniert ausgeführt ist. Der Bewegungsrhythmus für den Rasterweg 38 entspricht vollständig dem Bewegungsrhythmus des Rasterwegs 31, auf geradliniger Rasterwegstrecke 39 folgen zum Rücklauf von Probe oder Rasternadel Halbkreisbogen 40, 41, von denen jetzt die Halbkreisbogen 40 einen kürzeren Radius als die Halbkreisbogen 41 aufweisen. Im übrigen bleibt der Scannablauf erhalten, auf dem Bildschirm des Monitors erscheinen die elektronisch ausgewerteten Meßwerte zeilenweise.

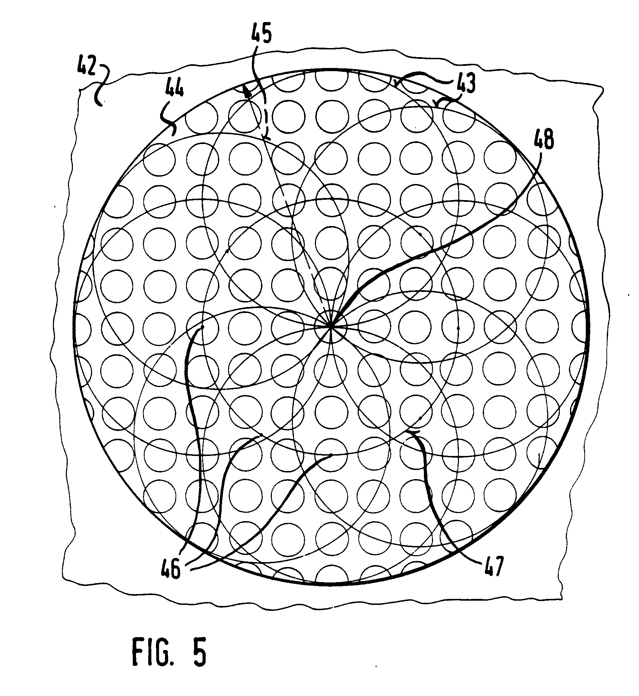

Figur 5 zeigt eine Scannbewegung, bei der zwischen Rastersonde und Probenoberfläche 42 kreisförmige.Relativbewegungen mit Kreisen 43 ausgeführt werden, die konstante Radien aufweisen. Um einen vorgegebenen Oberflächenbereich 44 abzutasten, der im Ausführungsbeispiel einer Kreisfläche mit einem Flächenradius 45 entspricht, erfolgt entsprechend der Fläche eine Verschiebung der Kreise 43 durch Änderung der örtlichen Lage ihrer Kreismittelpunkte 46 innerhalb des Oberflächenbereichs 44. Im Ausführungsbeispiel wird die Lage der Kreismittelpunkte 46 entlang einer Kreislinie 47 um einen Flächenmittelpunkt 48 des abzutastenden kreisförmigen Oberflächenbereichs 44 verändert, so daß bei einem Radius für die Kreislinie 47, dessen Länge der halben Länge des Flächenradius 45 entspricht, und bei einer Radienlänge für die Kreise 43 der Scannbewegung, die einem Viertel der Länge des Flächenradius 45 entspricht, nach einmaligem geschlossenen Durchfahren der Kreislinie 47 der kreisförmige Oberflächenbereich 44 vollständig abgetastet ist.

Statt die Kreismittelpunkte 46 auf einer Kreislinie 47 zu führen, ist eine Änderung der örtlichen Lage der Kreismittelpunkte beispielsweise auch entlang einer Geraden möglich. Bei kreisförmiger Scannbewegung wird in diesem Falle dann ein rechteckiger Oberflächenbereich abgetastet.

Die in der Zeichnung in Figuren 1 bis 5 wiedergegebenen Rasterwege ließen sich durch weitere Beispiele ergänzen. So ist neben der in Figur 2 dargestellten kreisförmigen Relativbewegung zwischen Rastersonde und Probenoberfläche auch eine elliptische Bewegung möglich, wobei nach jedem vollständigen Umlauf einer Ellipse ein steter Übergang mit beibehaltener Bewegungsgeschwindigkeit in eine nächste Ellipse mit kleineren oder größeren Ellipsenradien erfolgt, je nachdem mit dem Scannen im inneren oder äußeren Bereich des abzutastenden Oberflächenbereichs begonnen wurde. Möglich ist es auch, ellipsenartige Bewegungsabläufe in ähnlicher Weise aneinanderzureihen, wie es die Rasterwege nach Figur 4 zeigen und der Rasterbewegung eine Form ineinandergreifender Schleifen zu geben.

Wesentlich ist für alle Scannabläufe, die Bewegungsgeschwindigkeit weitgehend stetig zu halten und Richtungsänderungen allmählich durchzuführen, damit die Bewegungsabläufe ungestört bleiben. Alle Unstetigkeiten und Änderungen der Bewegungsgeschwindigkeit, die zu Störkräften führen, die Meßungenauigkeiten oder Verschlechterungen der Bildwiedergabe verursachen, werden vermieden.

Auf Rastersondenmikroskope und den Bewegungsablauf zwischen Rastersondenspitze und Probenoberfläche ist die Erfindung nicht beschränkt. Vor allem in solchen Fällen, bei denen zur Analyse von Materialien zwischen massebehafteter Meßsonde und zu untersuchender Materialprobe Relativbewegungen erforderlich sind, die bei wechselnden Bewegungsgeschwindigkeiten die Qualität des Analysenergebnisses beeinflussen, läßt sich das erfindungsgemäße Verfahren anwenden. Es kommt darauf an, die Relativbewegung stetig mit konstanter Geschwindigkeit und bei Änderung der Bewegungsrichtung unter Beibehaltung der Geschwindigkeit mit konstanter Beschleunigung in vorgegebener Bewegungsrichtung auszuführen, um so durch Bewegungsänderungen verursachte Störungen bei Analyse der Materialien weitgehend zu vermeiden.

## Patentansprüche

1. Verfahren zum rasterförmigen Scannen einer Probenoberfläche (1) mittels einer Meßsonde eines Rastermikroskops, bei dem sich Sonde und Probe während des Scannens relativ zueinander bewegen, und die Relativbewegung kurvenförmige Bewegungen aufweist (5, 6),
**dadurch gekennzeichnet,**
daß die Relativbewegung kurvenförmige Bewegungen mit Kurvendurchmessern, die ein mehrfaches des Abstands zweier benachbarter Punkte des Rastergitters (4) betragen, aufweist.

2. Verfahren nach einem der vorhergehenden Ansprüche,
**dadurch gekennzeichnet,**
daß die Bewegungen mit konstanter oder mit nahezu konstanter Bahngeschwindigkeit durchgeführt werden.

3. Anwendung des Verfahrens nach einem der vorhergehenden Ansprüche bei einer Relativbewegung zwischen massenbehafteter Meßsonde und Materialprobe bei während der Relativbewegung durchgeführter Materialanalyse.

## Claims

1. Process for raster-type scanning of the surface of a specimen (1) by means of a measurement probe of a scanning microscope, wherein the probe and the specimen move relative to one another during scanning, and the relative motion incorporates curvy movements (5, 6),
characterised in that the relative motion incorporates curvy movements having curve diameters amounting to a multiple of the distance between two neighbouring points of the raster grid (4).

2. Process according to the preceding claim,
characterised in that the movements are performed at a constant or almost constant rate of contouring travel.

3. Use of the process according to either of the preceding claims in the case of relative motion between a mass-encumbered measurement probe and a specimen of material, involving carrying out material analysis during the relative motion.

## Revendications

1. Procédé de balayage en forme de trame de la surface (1) d'un échantillon, au moyen d'une sonde de mesure d'un microscope à trame dans lequel, la sonde et l'échantillon sont déplacés l'un par rapport à l'autre pendant le balayage, et le mouvement relatif comporte des mouvements curvilignes (5, 6),
caractérisé en ce que le mouvement relatif comporte des mouvements curvilignes ayant des diamètres de courbe, qui représentent un multiple de la distance entre deux points voisins du réseau (4) de la trame.

2. Procédé suivant la revendication précédente
caractérisé
en ce que les mouvements s'effectuent à une vitesse constante ou à une vitesse presque constante.

3. Utilisation du procédé suivant l'une des revendications précédentes, pour un mouvement relatif entre une sonde de mesure qui a une masse et un échantillon de matériau lors de l'analyse de matériau effectuée pendant le mouvement relatif.
